(19) Europäisches Patentamt
European Patent Office
Office européen des brevets

(11) Numéro de publication: **0 039 273**
**B1**

(12) # FASCICULE DE BREVET EUROPEEN

(45) Date de publication du fascicule du brevet: **23.11.83**

(51) Int. Cl.³: **H 01 F 1/11**

(21) Numéro de dépôt: **81400603.7**

(22) Date de dépôt: **15.04.81**

(54) **Procédé de préparation de particules magnétiques de coercivité élevée à base d'oxydes de fer ferrimagnétique dopées au cobalt.**

(30) Priorité: **28.04.80 FR 8009498**

(43) Date de publication de la demande: **04.11.81 Bulletin 81/44**

(45) Mention de la délivrance du brevet: **23.11.83 Bulletin 83/47**

(84) Etats contractants désignés: **AT BE CH DE FR GB IT LI NL SE**

(56) Documents cités:
**DE - A - 2 242 500**
**DE - A - 2 413 430**
**FR - A - 2 074 706**

(73) Titulaire: **RHONE-POULENC INDUSTRIES, 22 Avenue Montaigne, F-75008 Paris (FR)**

(72) Inventeur: **Chamard, Alex, 45, rue Emile Zola, F-93120 La Courneuve (FR)**
Inventeur: **Dougier, Patrick, 8, Manoir de Denouval, F-78470 Andresy (FR)**
Inventeur: **Monteil, Jean-Bruno, 41, rue de la Grange aux Belles, F-75010 Paris (FR)**

(74) Mandataire: **Savina, Jacques, RHONE-POULENC RECHERCHES Service Brevets Chimie et Polymères 25, Quai Paul Doumer, F-92408 Courbevoie Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 039 273 B1

# Procédé de préparation de particules magnétiques de coercivité élevée à base d'oxydes de fer ferrimagnétiques dopées au cobalt

La présente invention concerne un procédé de préparation de particules d'oxydes de fer ferrimagnétiques dopées au cobalt et renfermant du fer à l'état ferreux en opérant — lors d'une première étape — en lit fluidisé, la décomposition thermique d'un complexe du cobalt à une température égale ou au-dessus de sa température de décomposition sur des particules d'oxydes de fer de formule $(FeO)_x \cdot Fe_2O_3$, et en recuisant — lors d'une deuxième étape — les particules obtenues à une température sensiblement la même que dans la première étape; puis on les laisse refroidir.

Les particules magnétiques d'oxydes de fer dopées au cobalt en surface ont une coercivité plus élevée que les particules magnétiques d'oxydes de fer classiques qui ne contiennent pas de cobalt. Elles présentent des propriétés magnétiques améliorées, mais nécessitent généralement la mise en œuvre de taux de cobalt assez élevés, ce qui renchérit leur coût. Lorsque leur taux de cobalt est assez faible, il est nécessaire d'avoir du fer à l'état divalent pour conserver les propriétés magnétiques; elles présentent alors des risques de perte de ces propriétés par oxydation du fer ferreux.

La titulaire a mis au point des particules magnétiques d'oxydes de fer ferrimagnétiques dopées au cobalt en surface présentant d'excellentes propriétés magnétiques alliées à une tenue thermique et une résistance à la perte des propriétés magnétiques au cours du temps exceptionnelles.

Par ailleurs, on sait préparer des particules magnétiques d'oxydes de fer contenant du cobalt par diverses méthodes. Ainsi, le brevet japonais No 4844040/1973 décrit un procédé par réaction hydrothermale d'un oxyde de fer magnétique dans une solution alcaline en présence d'un sel d'un métal de transition.

Le brevet japonais No 5085612/1975 décrit la préparation d'un oxyde de fer magnétique par dépôt de cobalt sur des particules aciculaires d'oxyde de fer, puis traitement avec des ions ferreux. Enfin, la demande de brevet français No 2387912 décrit la préparation d'un oxyde de fer magnétique par réduction partielle en phase gazeuse ou liquide puis dépôt de cobalt sur les particules aciculaires d'oxyde de fer en milieu alcalin.

Tous ces procédés utilisent le traitement en phase aqueuse de particules d'oxydes de fer aciculaires $(FeO)_x \cdot Fe_2O_3$ (avec $0 \leqslant x \leqslant 1,5$) par des complexes du cobalt obtenus en milieu alcalin et qui se fixent à la surface des particules. Un tel traitement par voie humide présente de très nombreux inconvénients. En effet, il est difficile de disperser les oxydes de fer en solution; les dépôts de cobalt, de fer ferreux à la surface des particules ne sont pas homogènes; il peut y avoir un mélange des divers états d'oxydations du cobalt ($Co^{2+}$, $Co^{3+}$) ou la présence de complexes $Co(OH)^+$ ou de précipités $Co(OH)_2$ inertes à la surface des particules. De plus, il est délicat de fixer le pourcentage de fer ferreux lorsque celui-ci est ajouté.

Pour remédier à la plupart des inconvénients présentés par ces traitements par voie humide, il a été proposé, selon le brevet allemand No 2242500, d'opérer un traitement par voie sèche de particules d'oxydes de fer. Selon ce procédé, on prépare les particules d'oxydes de fer ferrimagnétiques dopées au cobalt et renfermant du fer à l'état ferreux en opérant — lors d'une première étape — en lit fluidisé, la décomposition thermique d'un complexe du cobalt à une température égale ou au-dessus de sa température de décomposition sur des particules d'oxydes de fer de formule $(FeO)_x 0 \cdot Fe_2O_3$, et en recuisant — lors d'une deuxième étape — les particules obtenues à une température sensiblement la même que dans la première étape; puis on les laisse refroidir. Cependant, ce procédé conduit à des produits pyrophoriques d'utilisation mal commode.

La titulaire a mis au point un procédé de fabrication de particules d'oxydes de fer modifiés par le cobalt qui présente notamment les nombreux avantages de la voie sèche par rapport à la voie humide et qui conduit à des produits parfaitement adaptés au stockage magnétique d'informations. La coercivité élevée de ces particules est, de plus, assurée par des teneurs en cobalt et en fer à l'état ferreux optimal.

De plus, ces particules présentent une tenue thermique et une résistance au vieillissement particulièrement satisfaisantes.

Dans tout ce qui suit, Hc représente le champ coercitif, $\sigma_r$ représente l'aimantation rémanente et $\sigma_s$ représente l'aimantation à saturation.

La présente invention concerne un procédé de préparation de particules d'oxydes de fer ferrimagnétiques dopées au cobalt et renfermant du fer à l'état ferreux, en opérant — lors d'une première étape — en lit fluidisé, la décomposition thermique d'un complexe du cobalt à une température égale ou au-dessus de sa température de décomposition sur des particules d'oxydes de fer de formule $(FeO)_x \cdot Fe_2O_3$, et en recuisant — lors d'une deuxième étape — les particules obtenues à une température sensiblement la même que dans la première étape, puis on les laisse refroidir, procédé caractérisé en ce que, dans la première étape, on opère en lit fluidisé la décomposition thermique d'un complexe β-dicétone du cobalt à une température comprise entre 300 et 500° C sur des particules d'oxydes de fer de formule $(FeO)_x \cdot Fe_2O_3$ dans laquelle $0 \leqslant x \leqslant 1,5$; dans la deuxième étape, on recuit les particules obtenues à une température comprise entre 300 et 500° C, puis on les laisse refroidir sous balayage de gaz inerte; dans une troisième étape, on effectue la réoxydation ménagée du produit obtenu.

Selon la première étape du procédé de l'invention, on opère la décomposition thermique d'un complexe β-dicétone du cobalt sur des particules

d'oxyde de fer de formule $(FeO)_x \cdot Fe_2O_3$, dans laquelle $0 \leqslant x \leqslant 1,5$.

Les complexes β-dicétone du cobalt mis en œuvre selon cette étape doivent être tels que leur température de décomposition soit comprise entre 300 et 500° C et que leur température de sublimation soit inférieure à leur température de décomposition. Ils ont pour formule $Co(L)_n$ dans laquelle n=2 ou 3 et L est représenté par la formule:

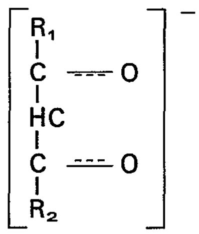

dans laquelle $R_1$ et $R_2$ sont des radicaux alkyle ayant de préférence de 1 à 5 atomes de carbone.

Comme complexes, on pourra notamment mettre en œuvre l'acétylacétonate de cobalt II de formule $Co(A)_2$ avec A représenté par

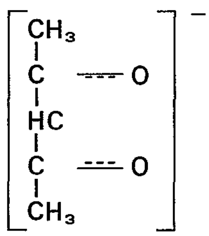

ou les complexes $Co(thd)_3$ ou $Co(thd)_2$ dans lesquels thd représente:

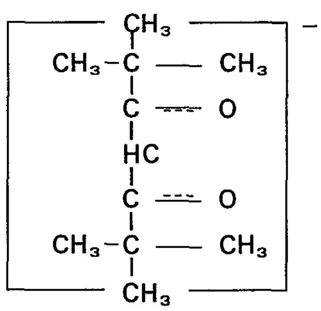

Les particules d'oxydes de fer que l'on met en œuvre ont pour formule $(FeO)_x \cdot Fe_2O_3$ dans laquelle $0 \leqslant x \leqslant 1,5$; elles peuvent avoir été obtenues par exemple par déshydratation, puis réduction de particules aciculaires d'oxyhydrate de fer FeOOH.

L'un des avantages du procédé de l'invention réside dans la possibilité de préparer l'oxyde de fer mis en œuvre dans le même lit fluidisé que celui dans lequel on effectue la réaction de décomposition du complexe β-dicétone, donc de faire ces deux opérations successivement en continu.

Les particules d'oxydes de fer sont fluidisées à l'aide d'un gaz vecteur généralement constitué d'un mélange d'azote et d'hydrogène sous un débit assurant la fluidisation. Le complexe du cobalt est de préférence introduit dans la zone de fluidisation par sublimation de celui-ci dans le gaz vecteur.

La température de la décomposition thermique est comprise entre 300 et 500° C. Le temps de traitement de la poudre est fonction du pourcentage de cobalt que l'on désire déposer sur les particules.

Selon la seconde étape du procédé de l'invention, on recuit les particules obtenues dans la première étape. La température de recuit est de préférence comprise entre 300 et 500° C; celui-ci est généralement opéré pendant un temps compris entre 1 et 3 h. On laisse ensuite refroidir les particules à température ambiante sous balayage de gaz inerte pour éliminer notamment les composés organiques et l'hydrogène présent.

Selon la troisième étape du procédé de l'invention, on effectue la réoxydation ménagée du produit obtenu. Cette réoxydation a pour but de former une couche de ferrite de cobalt en surface des particules. Sans limiter la présente invention à la théorie, on peut penser que la cristallisation de cette couche

$$[(Co_x^{2+}Fe_y^{2+})O_{x+y}]_z\, Fe_2O_3$$

est très rapide du fait de l'atomisation du cobalt sur les particules, cela constituant un avantage supplémentaire du procédé selon l'invention.

La réoxydation peut être opérée à l'aide d'un mélange air/gaz inerte à une température comprise entre 200 et 300° C.

Le temps de traitement permet de régler aisément le pourcentage de fer à l'état ferreux désiré; celui-ci est généralement compris entre 10 et 30 min.

Les particules magnétiques à base d'oxydes de fer ferrimagnétiques dopées au cobalt obtenues selon le procédé de l'invention présentent une structure spinelle type $Fe_2O_3$ ou $Fe_3O_4$ suivant le pourcentage de $Fe^{2+}$; le cobalt est présent en surface à l'état de $Co^{2+}$ dans la structure spinelle.

Ces particules présentent d'excellentes propriétés magnétiques statiques (coercivité $H_c$, $\sigma_r$, $\sigma_s$). En particulier, les particules magnétiques préférées de l'invention pour les applications vidéo contiennent généralement de 2,5 à 4% environ de cobalt et de 6 à 16% environ de $Fe^{2+}$; pour ces teneurs, les valeurs de $H_c$, $\sigma_r$ et $\sigma_s$ sont généralement telles que

$$47,7 < Hc < 50,9\ kAm^{-1}$$
$$44,0 < \sigma_r < 47,8\ nTm^3g^{-1}$$
$$95,5 < \sigma_s < 101,8\ nTm^3g^{-1}$$
$$0,43 < \frac{\sigma_r}{\sigma_s} < 0,50$$

Les particules magnétiques préférées de l'invention pour les applications audio contiennent généralement de 1 à 2,5% environ de cobalt et de 5 à 16% environ de $Fe^{2+}$; pour ces teneurs, les valeurs de $H_c$, $\sigma_r$ et $\sigma_s$ sont généralement telles que

$$42,2 < Hc < 45,4\ kAm^{-1}$$
$$45,2 < \sigma_r < 46,5\ nTm^3g^{-1}$$
$$98,0 < \sigma_s < 106,8\ nTm^3g^{-1}$$
$$0,42 < \frac{\sigma_r}{\sigma_s} < 0,45$$

De ces valeurs, il ressort que les particules selon l'invention sont particulièrement intéressantes pour l'enregistrement magnétique en ce qu'elles permettent une optimisation très avantageuse des taux en Co et en $Fe^{2+}$.

Outre des excellentes propriétés magnétiques, les particules de l'invention présentent une tenue thermique et une résistance à la perte des propriétés magnétiques au cours du temps exceptionnelles, ce qui permet d'assurer et de conserver un enregistrement magnétique de très haute qualité.

Ainsi, les particules d'oxydes de fer ferrimagnétiques dopées au cobalt de l'invention présentent généralement une perte relative des propriétés magnétiques représentée par

$$\frac{\Delta Hc}{Hc} + \frac{\Delta\sigma_r}{\sigma_r}$$

après vieillissement 2 semaines à 90° C, inférieure à 2%. Par ailleurs, elles présentent généralement une coercivité supérieure à 39,8 kA/m après un court échauffement à 60° C. De plus, les pertes de coercivité résultant d'un court échauffement à une température inférieure ou égale à environ 100° C sont réversibles.

La résistance exceptionnelle à la perte des propriétés magnétiques des particules de l'invention permet de comparer celles-ci avec les produits dopés au cobalt sans $Fe^{2+}$, les particules de l'invention possédant par ailleurs des propriétés magnétiques statiques bien supérieures à ces produits.

Les particules magnétiques de l'invention peuvent notamment être utilisées pour la fabrication de supports magnétiques d'enregistrements tels que l'enregistrement digital ou analogique sur disques souples, disques rigides, bandes pour magnétophones classiques, magnéto-cassettes audio ou vidéo.

Les exemples ci-après illustrent l'invention sans en limiter la portée.

*Exemple 1*

On a placé 25 g d'une poudre de $Fe_3O_4$ aciculaire dans un lit fluide porté à 400° C. On a fluidisé cette poudre à l'aide d'un gaz vecteur constitué d'un mélange $N_2/H_2$ contenant 7% d'hydrogène sous un débit de 100 l/h.

On a introduit dans le gaz vecteur 4,5 g de vapeur d'acétylacétonate de cobalt de formule

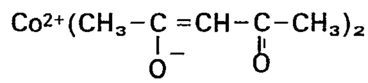

produite par sublimation à 175° C pendant 2½ h d'une source de 5 g d'acétylacétonate de cobalt.

On recuit la poudre obtenue à 400° C pendant 1 h sous azote.

On laisse ensuite refroidir la poudre dans le lit fluidisé sous balayage d'azote.

La poudre ainsi obtenue a enfin subi un traitement oxydant par un mélange $N_2$/air contenant 20% d'air en lit fluide à 250° C pendant 25 min environ. Les caractéristiques des particules magnétiques obtenues sont données au tableau 1.

*Exemple 2*

On a opéré comme dans l'exemple précédent, mais en utilisant seulement un temps de sublimation de 2 h.

Les caractéristiques des particules magnétiques obtenues sont données au tableau 1.

*Exemple 3*

On a opéré comme dans l'exemple 1, mais en utilisant seulement 3,2 g d'acétylacétonate de cobalt au départ.

Les caractéristiques des particules magnétiques obtenues sont données au tableau 1.

*Exemple 4*

On a opéré comme à l'exemple 3, mais avec un traitement thermique oxydant de seulement 15 min.

Les caractéristiques des particules magnétiques obtenues sont données au tableau 1.

*Tableau I*

| Nº de l'exemple | % $Fe^{2+}$ | % $Co^{2+}$ | $H_c$ | $\sigma_r$ | $\sigma_s$ | $\sigma_r/\sigma_s$ |
|---|---|---|---|---|---|---|
| 1 | 9,0 | 3,8 | 50,1 | 44,0 | 96,8 | 0,45 |
| 2 | 9,0 | 3,6 | 48,5 | 45,2 | 98,0 | 0,46 |
| 3 | 8,5 | 2,1 | 42,9 | 44,6 | 98,6 | 0,45 |
| 4 | 8,0 | 2,2 | 43,8 | 45,2 | 98,0 | 0,46 |

Dans ce tableau les pourcentages sont exprimés en poids, Hc en $kAm^{-1}$ et $\sigma_r$ et $\sigma_s$ en nT $m^3$ $g^{-1}$.

*Exemple 5*

Cet exemple illustre la résistance aux sollicitations thermiques et au vieillissement des particules obtenues à l'exemple 4.

La perte relative des propriétés magnétiques représentées par

$$\frac{\Delta Hc}{Hc} + \frac{\Delta\sigma_r}{\sigma_r}$$

après vieillissement 2 semaines à 90° C de ces particules, est égale à 1,5%.

Après un échauffement de 30 min à 60° C, la coercivité des particules mesurée à cette température est de 40,6 $kAm^{-1}$.

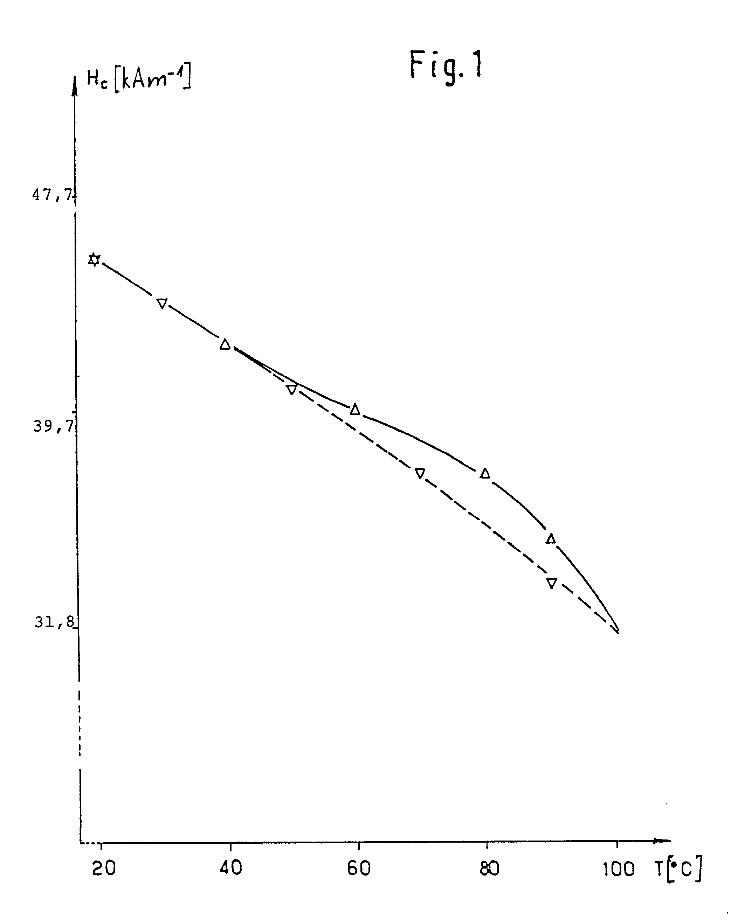

La variation du champ coercitif des particules en fonction de la température est donnée à la fig. 1. On constate que les pertes de champ coercitif sont notamment réversibles entre 20 et 100° C.

## Revendications

1. Procédé de préparation de particules d'oxydes de fer ferrimagnétiques dopées au cobalt et renfermant du fer à l'état ferreux en opérant — lors d'une première étape — en lit fluidisé, la décomposition thermique d'un complexe du cobalt à une température égale ou au-dessus de sa température de décomposition sur des particules d'oxydes de fer de formule $(FeO)_x \cdot Fe_2O_3$, et en recuisant — lors d'une deuxième étape — les particules obtenues à une température sensiblement la même que dans la première étape; puis on les laisse refroidir, procédé caractérisé en ce que, dans la première étape, on opère en lit fluidisé la décomposition thermique d'un complexe β-dicétone du cobalt à une température coprise entre 300 et 500° C sur des particules d'oxydes de fer de formule $(FeO)_x \cdot Fe_2O_3$ dans laquelle $0 \leqslant x \leqslant 1,5$; dans la deuxième étape, on recuit les particules obtenues à une température comprise entre 300 et 500° C, puis on les laisse refroidir sous balayage de gaz inerte; dans une troisième étape, on effectue la réoxydation ménagée du produit obtenu.

2. Procédé selon la revendication 1, caractérisé en ce que le complexe β-dicétone du cobalt répond à la formule générale $Co(L)_n$ dans laquelle $n=2$ ou 3 et L est représenté par la formule:

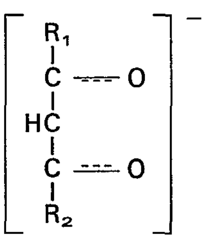

dans laquelle $R_1$ et $R_2$ sont des radicaux alkyle ayant de préférence de 1 à 5 atomes de carbone.

3. Procédé selon la revendication 2, caractérisé en ce que le complexe β-dicétone est choisi parmi le groupe constitué par l'acétylacétonate de cobalt et le complexe $Co(thd)_3$ dans lequel thd représente:

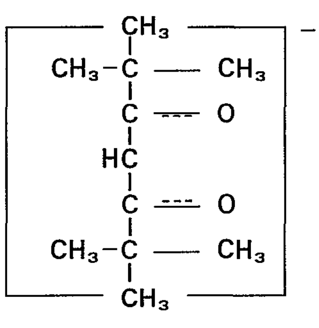

4. Procédé selon la revendication 1, caractérisé en ce que la réoxydation est opérée à l'aide d'un mélange air/gaz inerte à une température comprise entre 200 et 300° C.

## Ansprüche

1. Verfahren zur Herstellung von kobaltdotierten ferrimagnetischen Eisenoxidteilchen, die das Eisen in zweiwertigem Zustand enthalten, durch thermische Zersetzung eines Kobaltkomplexes bei einer Temperatur gleich oder über seiner Zersetzungstemperatur auf Eisenoxidteilchen der Formel $(FeO)_xFe_2O_3$ in einer ersten Stufe und durch Wiedererhitzung der erhaltenen Teilchen in einer zweiten Stufe bei einer im wesentlichen gleichen Temperatur wie in der ersten Stufe und anschliessendes Abkühlen, dadurch gekennzeichnet, dass man in der ersten Stufe im Wirbelbett die thermische Zersetzung eines Kobalt-β-diketonkomplexes bei einer Temperatur zwischen 300 und 500° C auf Eisenoxidteilchen der Formel $(FeO)_xFe_2O_3$, in der $0 \leqslant x \leqslant 1,5$ ist, vornimmt, in der zweiten Stufe die erhaltenen Teilchen erneut auf eine Temperatur zwischen 300 und 500° C erhitzt, dann unter Spülen mit einem inerten Gasstrom abkühlen lässt und in einer dritten Stufe die schonende Reoxydation des erhaltenen Produktes durchführt.

2. Verfahren nach Anspruch 1, dadurch gekennzeichnet, dass der Kobalt-β-diketonkomplex der allgemeinen Formel $Co(L)_n$ entspricht, in der n 2 oder 3 ist und L durch die Formel

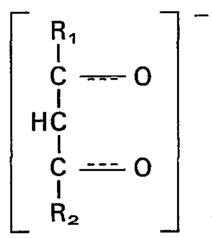

dargestellt ist,

in der $R_1$ und $R_2$ Alkylreste sind, die vorzugsweise 1 bis 5 Kohlenstoffatome haben.

3. Verfahren nach Anspruch 2, dadurch gekennzeichnet, dass der β-Diketonkomplex aus der Gruppe von Kobaltacetylacetonat und dem $Co(thd)_3$-Komplex gewählt ist, in dem thd bedeutet:

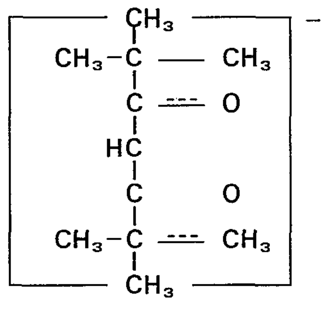

4. Verfahren nach Anspruch 1, dadurch gekennzeichnet, dass die Reoxydation mit Hilfe eines

Luft/Inertgas-Gemisches bei einer Temperatur zwischen 200 und 300° C durchgeführt wird.

## Claims

1. Process for the preparation of particles of ferrimagnetic iron oxides, doped with cobalt and containing iron in the ferrous state, which comprises—in a first step—thermally decomposing a cobalt complex, in a fluidised bed, at a temperature equal to or above its decomposition temperature, on particles of iron oxides of the formula $(FeO)_xFe_2O_3$, and—in a second step—reheating the particles obtained to substantially the same temperature as in the first step and then allowing them to cool, characterised in that, in the first step, a β-diketone complex of cobalt is thermally decomposed, in a fluidised bed, at a temperature of between 300 and 500° C, particles of iron oxides of the formula $(FeO)_x\ Fe_2O_3$, in which $0 \leqslant x \leqslant 1.5$; in the second step, the particles obtained are reheated to a temperature of between 300 and 500° C and then allowed to cool while being swept with inert gas, and, in a third step, the product obtained is subjected to controlled reoxidation.

2. Process according to claim 1, characterised in that the β-diketone complex of cobalt corresponds to the general formula $Co(L)_n$ in which $n=2$ or 3 and L is represented by the formula:

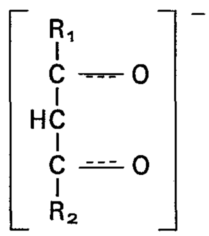

in which $R_1$ and $R_2$ are alkyl radicals preferably having from 1 to 5 carbon atoms.

3. Process according to claim 2, characterised in that the β-diketone complex is chosen from the group comprising cobalt acetylacetonate and the complex $Co(thd)_3$ in which thd represents:

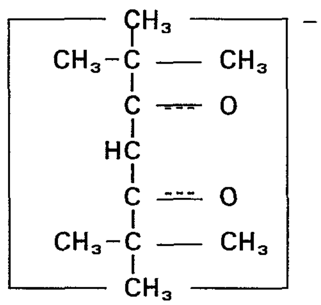

4. Process according to claim 1, characterised in that the reoxidation is carried out using a mixture of air and inert gas at a temperature of between 200 and 300° C.

Fig.1